# EUROPEAN PATENT SPECIFICATION

(11) **EP 0 301 700 B1**
(45) Date of publication and mention of the grant of the patent: **09.06.1993**
(21) Application number: 88305745.7
(22) Date of filing: 22.06.1988
(51) Int. Cl.: C01B 17/90

(54) **Neutralization of sulfuric acid containing iron ions**
Neutralisieren von Eisenionen enthaltenden Schwefelsäuren
Neutralisation d'acide sulfurique contenant des ions de fer

(30) Priority: 30.06.1987 JP 160849/87; 14.09.1987 JP 228539/87
(43) Date of publication of application: 01.02.1989
(73) Proprietor: Solex Research Corporation of Japan, Shibuya-ku Tokyo (JP)
(72) Inventor: Watanabe, Mario, Nishinomiya-shi Hyogo-ken (JP); Sei, Renpei, Kamakura-shi Kanagawa-ken (JP)
(74) Representative: Brewer, Leonard Stuart

(56) References cited:
- US-A- 4 210 502
- PATENT ABSTRACTS OF JAPAN, volume 4, no. 174 (C-33)(656) 2nd December 1980; & JP-A-55 116 489 (SUMITOMO KINZOKU KOGYO K.K.) 08-09-1980
- CHEMICAL ABSTRACTS, volume 84, no. 20, 17th May 1976, page 340, abstract 140493x; T. KAWANISHI et al.: "Neutralization of waste water containing sulfuric and sulfurous acids with lime stone"; & JP-A-75 156 266
- CHEMICAL ABSTRACTS, volume 107, no. 8, 24 August 1987, page 324, abstract 64190x; L. SANTORO et al.: "Limestone neutralization of acid waters in the presence of surface precipitates"; & WATER RES., volume 21, no. 6, 1987, pages 641-647 (cat. A)
- CHEMICAL ABSTRACTS, volume 99, no. 4, 25th July 1983, page 302, abstract 27449j; J. STURC et al.: "New technology for neutralization of spent sulfate pickling baths"; & HUTN. LISTY, volume 38, no. 4, 1983, pages 268-275

## Description

The present invention relates to a method for neutralization of sulfuric acid which, as its main impurity, contains iron ions.

It is commonplace to add sodium hydroxide for neutralization of sulfuric acids containing iron ions as their main impurity, such as waste sulfuric acid from surface treatments of steel products, from refining processes for non-ferrous metals and from production processes for titanium oxide that use sulfuric acid, as well as sulfuric acid obtained by distilling or evaporating hydrochloric acid or nitric acid containing iron ions to which sulfuric acid has been added. However, such a method is uneconomical, because sodium hydroxide is valuable, whereas the sodium sulfate obtained as by-product is of almost no commercial value.

It is also known to use ammonia gas or ammonium hydroxide in some instances, but commercialization of the ammonium sulfate then obtained as a by-product is difficult, while anyway ammonium sulfate itself is cheap, and, such a method also is therefore not economical. It is possible to use Ca(OH)₂ or CaCO₃, which are cheaper than NaOH and NH₄OH, but then disposal of the solid by-product, CaSO₄·2H₂O (gypsum), is troublesome, so that the use of such a calcium compound also is not desirable.

Thus the current situation is that factories, in which waste sulfuric acid containing iron ions is formed as by-product, are trying to find a new market for Na₂SO₄ or to develop an effective use of gypsum (CaSO₄·2H₂O). Till now, however, no effective and economical method for neutralization of waste sulfuric acid containing iron ions had yet been discovered.

Besides the neutralization process, there is another way for the recovery and reuse of sulfuric acid solution containing Fe ions, in which the solution is subjected to evaporation under reduced pressure so as thereby to precipitate FeSO₄·7H₂O and thus to reduce the content of Fe ion in the residual solution. This method is in fact widely adopted, but since it is impossible to obtain pure sulfuric acid entirely free from Fe ion and a large amount of energy is consumed in the evaporation and concentration, this method is neither practical nor economical.

For completeness, it may be mentioned that in United States Patent No. 4,210,502 we have disclosed an essentially-electrolytic procedure for treatment of waste acids during which at a certain stage ferric ions are extracted in the form of a chloride complex into an organic phase, but this procedure involves the use of expensive hydrochloric acid to generate relatively cheap sulfuric acid and is therefore economically unattractive.

Against that background, it is an object of the present invention to provide an excellent and economical method for neutralization of sulfuric acids which contain iron ions as their main impurity, by means of which iron can be recovered as high purity iron oxide and/or metallic iron, thus enhancing the commercial value of the procedure, and yet without any need to use valuable NaOH, NH₃ and NH₄OH or a calcium compound such as Ca(OH)₂ and CaCO₃ (which produce troublesome gypsum (CaSO₄)₂·2H₂O), but using instead a chlorine-containing compound, for instance NaCl which is cheap and easily available or MgCl₂ which is plentifully-produced as industrial waste or CaCl₂ or NH₄Cl.

According to this invention there is provided a method for neutralization of sulfuric acid containing Fe ions, comprising adding ions selected from the group consisting of Na ions, K ions, Mg ions, Ca ions and NH₄ ions, in the form of a compound containing chlorine, to said sulfuric acid solution containing impurities chiefly comprising iron ions, in an amount corresponding at least to the chemical equivalent to SO₄²⁻, and bringing the resultant solution into contact with an organic solvent (b) containing oxygen and/or comprising alkylamine, so as thus to extract Fe ions from said aqueous solution into the organic solvent as chloride complex.

Although primarily concerned with the treatment of iron-contaminated waste sulfuric acid, the method of the present invention can also be advantageously used for treatment of waste Fe-contaminated hydrochloric acid and nitric acid, by adopting a preliminary procedure in which sulfuric acid is added to the Fe-containing waste acid and the resultant solution is evaporated or distilled so as to recover HCl or HNO₃ therefrom, thus transforming the residual solution to Fe-contaminated sulfuric acid, and thereafter the sulfuric acid thus obtained is treated in the same way as indicated above.

This new procedure involves treatment of a sulfuric acid solution containing iron ions by adding thereto one or more chlorine-containing compounds which provide a source of Na ions, K ions, Mg ions, Ca ions and/or NH₄ ions, said compound(s) being added in an amount corresponding to at least the chemical equivalent of the SO₄²⁻ contained in the acid, and the resultant aqueous solution is then brought into contact with at least one organic solvent containing oxygen and/or comprising an alkylamine, so as thus to extract Fe ions from said sulfuric acid solution into the organic phase as a chloride complex.
The organic solvent containing Fe as chloride complex thus obtained is then preferably brought into contact with water to extract back iron and chlorine therefrom into the aqueous phase and regenerate the organic solvent.

Further, for increasing the inverse extraction effect, it is preferable that another organic solvent containing oxygen, for instance, an alcohol with a carbon number of 6 - 18 (primary, secondary and tertiary) is added to the organic phase before the organic phase is brought into contact with water, and then the resultant organic solution is brought into contact with water to inversely extract Fe ions and Cl ions into the aqueous phase, and the remaining organic solution is distilled or evaporated under reduced or ordinary atmospheric pressures to separate and regenerate the organic solvent added prior to the inverse extraction as the original state.

As a modified process, the organic solvent containing iron chloride complex may be distilled or evaporated under reduced or ordinary atmospheric pressures prior to the contact with water for separating and recovering water and hydrochloric acid from the organic solution, and then the remaining organic solution is brought into contact with water to inversely extract Fe ions and Cl ions into the aqueous solution and regenerate the organic solvent.

In the present invention, separately, after adding sulfuric acid to a hydrochloric acid solution containing chiefly Fe ions, ions selected from the group consisting of Na ions, K ions, Mg ions, Ca ions and NH₄ ions in the form of a compound containing chlorine are added in an amount corresponding at least to the chemical equivalent to SO₄²⁻, and the resultant aqueous solution can be treated with addition of at least one of oxygen-containing organic solvents or alkylamine organic solvents similarly as described in the above. Hydrochloric acid or nitric acid containing Fe ions after adding sulfuric acid may be distilled or evaporated under reduced or ordinary atmospheric pressures to separate and recover HCl or HNO₃, and then the remaining aqueous solution can also be treated in the manner herein disclosed.

It will be seen that while no satisfactory and economical method for the neutralization of sulfuric acid containing Fe ions had been discovered in the past, the present invention provides an excellent and economical method for the neutralization thereof, and moreover one in which further refined iron hydroxide, oxide and metallic iron can be recovered.

Particularly, taking rock salt as a typical source of the sodium chloride for use as the additive for the chloridizing process (B) as will be described hereinafter, it will be realized that rock salt is distributed widely on earth and thus not only easily obtainable but also cheap, while moreover the aqueous solution as the residual solution (D) in the extraction process (C) in this instance comprises Na₂SO₄, so that purified Glauber salt (Na₂SO₄·10H₂O) can easily be recovered therefrom with no need for evaporation and concentration. Therefore, the pollution of rivers by the waste solution can to a substantial extent be prevented by practising the present invention.

The invention will now be described in greater detail as follows. One starts with a sulfuric acid solution contaminated chiefly with Fe ions, but possibly also with other metal ions such as Al, Mn, Cr, V, Sn and Nb and so on, which has been used for surface treatment of a metal product or a metal material, or particularly which has been discharged to waste in the production of titanium oxide by the sulfuric acid process. To this waste acid solution one adds ions selected from the group consisting of Na ions, K ions, Mg ions, Ca ions and NH₄ ions, in the form of a compound containing chlorine, and in an amount at least corresponding to the chemical equivalent of the added ions relative to the SO₄²⁻. In any case where the iron present in the sulfuric acid solution is in the Fe²⁺ state, such ions are first oxidized to Fe³⁺. The resultant aqueous phase is brought into contact with an oxygen-containing organic solvent and/or with alkylamine. Then Fe³⁺ ions in the sulfuric acid solution are extracted into the organic solvent as a chloride complex. In this way the sulfuric acid can be neutralized, for instance according to the following equations:

Fe₂(SO₄)₃ + H₂SO₄ + 8NaCl + Org. → 2HFeCl₄·Org. + 4Na₂SO₄

FeSO₄ + H₂SO₄ + 4NaClO + 7H⁺ + Org. → HFeCl₄·Org. + 2Na₂SO₄ + 4H₂O

Fe₂(SO₄)₃ + H₂SO₄ + 8KCl + Org. → 2HFeCl₄·Org. + 4K₂SO₄

Fe₂(SO₄)₃ + H₂SO₄ + 4CaCl₂ + Org. → 2HFeCl₄·Org. + 4CaSO₄

FeSO₄ + H₂SO₄ + CaCl₂·Ca(ClO)₂·2H₂O + 3H⁺ + Org. → HFeCl₄·Org. + 2[CaSO₄·2H₂O]

Fe₂(SO₄)₃ + H₂SO₄ + 4MgCl₂ + Org. → 2HFeCl₄·Org. + 4MgSO₄

Fe₂(SO₄)₃ + H₂SO₄ + 8NH₄Cl + Org. → 2HFeCl₄·Org. + 4(NH₄)₂SO₄

From this it can be appreciated that when the content of Fe ions in the original sulfuric acid solution is small as compared with the content of SO₄ ions, it is necessary to adjust the iron concentration by adding Fe ions thereto in order to be able to neutralize H₂SO₄ sufficiently by the use of a compound comprising such a component as Na, K or NH₄ together with Cl. As a method for adjusting the iron concentration, for instance in the case of waste sulfuric acid from the production of titanium oxide, one adds materials such as ilmenite, anatase or high-titanium slag (as it stands, or after the reduction treatment) or iron-containing industrial waste (in the case when its treatment is difficult) to the waste sulfuric acid so as thereby to dissolve Fe ions therein selectively and thus to control the ratio of Fe to sulfuric acid in the solution. By dissolving out iron in the raw material with the use of waste acid in this way, the TiO₂ concentration in ilmenite, anatase or high-titanium slag is increased, thus simultaneously enhancing its value as a raw material.

On the other hand, by bringing the organic solvent containing iron chloride complex into contact with water, the Fe ions and Cl ions as is well known are re-extracted back into the aqueous phase, and the organic solvent is regenerated according to the well known equation as shown below:

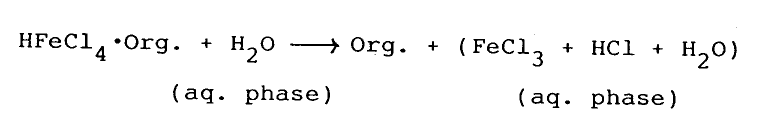

Furthermore, before bringing the organic solvent containing the extracted iron chloride complex into contact with water, an oxygen-containing organic solvent with which a large quantity of water can be extracted, such as an alcohol (primary, secondary and tertiary) with a carbon number of 6 - 18 is added so as to increase the re-extraction efficiency, and then the resultant organic solution is brought into contact with water for re-extracting the Fe ions and Cl ions in the organic solution back into the aqueous phase, and the remaining organic solution is distilled or evaporated off under reduced or ordinary atmospheric pressures, so as thereby to separate the oxygen-containing organic solvent added to the organic solution prior to the re-extraction (for instance alcohol) and thus regenerate the original organic solvent back to its original state.

The organic phase containing iron chloride complex is then further subjected to distillation or evaporation under reduced or ordinary atmospheric pressures, so as to recover HCl and H₂O therefrom according to the following equation:

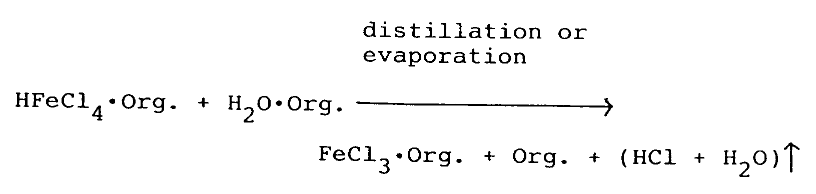

The remaining organic phase is then subjected to re-extraction in contact with water as follows: 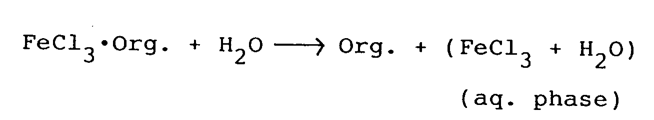
In this situation, since the back-extracted aqueous phase contains no HCl, one can obtain a concentrated FeCl₃ solution, and accordingly the production of iron hydroxide and oxide from the FeCl₃ thus transferred into the aqueous phase can be economically achieved.

Alternatively, the distillation of the organic phase containing the iron chloride complex may be carried further under reduced pressure so as to distil off and recover the organic solvent, leaving FeCl₃ as an anhydrous solid, as shown below: 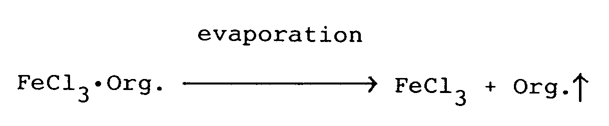
The recovered organic solvent can be recycled for re-use in the extraction of iron chloride complex. Furthermore, in this instance, since the FeCl₃ contains no water of crystallization, its recovery as iron oxide or metallic iron can be easily achieved as follows:

FeCl₃ + 3/4 O₂ → 1/2 Fe₂O₃ + 1.5Cl₂↑

FeCl₃ + 1.5H₂O → 1/2 Fe₂O₃ + 3HCl↑

FeCl₃ + 1.5H₂ → Fe + 3HCl↑

The thus-recovered FeCl₃ may also be employed for the production of various alkoxides, as in the following equation:

FeCl₃ + 3ROH + 3NH₃ → Fe(OR)₃ + 3NH₄Cl

where ROH indicates an alcohol.

The recovery of iron in this way, as an optional procedure in the present invention, can be achieved in various different ways. Thus, according to practical needs, it is possible freely to choose the production of iron hydroxide, of iron oxide, of iron chloride (solid), of iron alkoxide or of metallic iron.

The compound containing Na and Cl used in the present invention will typically be NaCl, chiefly in the form of rock salt, but such compounds as NaClO and NaClO₃ may also be used. The compound containing Ca and Cl will typically be CaCl₂ (exhausted in large quantity as industrial waste) but such compounds as CaCl₂·Ca(ClO)₂ may also be used. Further, NH₄Cl and MgCl₂ may also be used.

For the oxidation of Fe²⁺ ions in the sulfuric acid solution into Fe³⁺ ions, a compound such as sodium hypochlorite (NaClO) or calcium chloride-hypochlorite (CaCl₂·Ca(ClO)₂) can be used. Further, NOₓ-type oxidizing agents such as HNO₃, NaNO₃, NH₄NO₃ and NOₓ gas may also be employed.

When Fe²⁺ ions are oxidized to Fe³⁺ ions with HNO₃, then HNO₃ is extracted into the organic phase together with the iron chloride complex (HNO₃ + Org. → HNO₃·Org.) and this co-extracted HNO₃ is brought into contact with an aqueous solution containing NaCl prior to the re-extraction of Fe ions and Cl ions, in order thereby to back-extract HNO₃ into the aqueous solution, leaving Fe ions and Cl ions in the organic solvent. (HNO₃·Org + NaCl → Org. + NaNO₃ + HCl)

HCl remaining in the aqueous solution helps to improve the extraction distribution ratio of the iron chloride complex, so that Fe ions and Cl ions co-present with HNO₃ remain in the organic phase. Meanwhile the back-extracted HNO₃ is re-used for the oxidation of Fe²⁺ ions.

The oxygen-containing organic solvent and/or alkylamine used in the present invention is selected from the following groups:
(a) The group of ethers:
   Ethers to be used as an oxygen-containing organic solvent in the present invention are selected from the group consisting of saturated and unsaturated aliphatic and aromatic ethers, for instance diisoamyl ether, diethyl ether, diisopropyl ether, dichlorodiethyl ether and so on.
(b) The group of ketones: 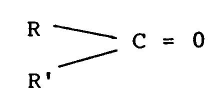 (where R and R' each represents an alkyl or aryl radical with a carbon number of 2 - 18) including methyl isobutyl ketone, methyl propyl ketone, methyl amyl ketone, cyclohexanone, methyl cyclohexanone and so on.
(c) The group of esters:
   The group of phosphoric acid esters selected from the group consisting of the following types: 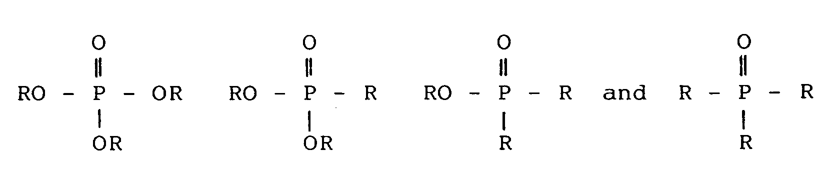 (where R represents an alkyl radical with a carbon number of 4 - 18).
(d) The group of amides: 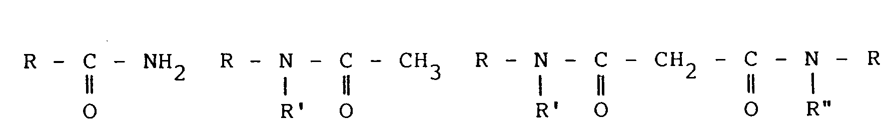 (where R, R' and R" each represents an alkyl radical with a carbon number of 2 - 18)
(e) The group of alcohols:
   Various primary, secondary and tertiary alcohols with a carbon number of 4 to 18.
(f) The group of alkylamines:
   Various primary, secondary and tertiary alkylamines with a carbon number in the alkyl group of 4 to 24.

When using an organic solvent having a high degree of basicity, such as alkylphosphineoxide, the amount of Cl ions extracted together with Fe ions is very often three times Fe ions (in terms of the molar ratio) according to the following reaction:

Fe₂(SO₄)₃ + 6NaCl + n·Org. → 2FeCl₃·n·Org. + 3Na₂SO₄

Therefore, when such highly basic extractants are used, it is necessary to add Fe-containing solid or liquid so as to ensure that the molar ratio of Fe ions to the sum of SO₄ combined with Fe and free SO₄ approaches the maximum ratio (about 0.66). Needless to say, at plants where titanium oxides are produced it is possible to adjust the molar ratio of Fe ions by adding titanium materials, such as anatase and ilmenite, iron sulfate or wastes containing Fe and Ti.

In the present invention, the organic solvent used for the extraction of iron chloride is sometimes diluted with a petroleum hydrocarbon comprising aliphatic and aromatic hydrocarbons or a mixture thereof. A mixture of various hydrocarbons such as kerosene is also frequently used.

In order that the invention may be still better understood it will now be further described with reference to the accompanying drawings, in which:

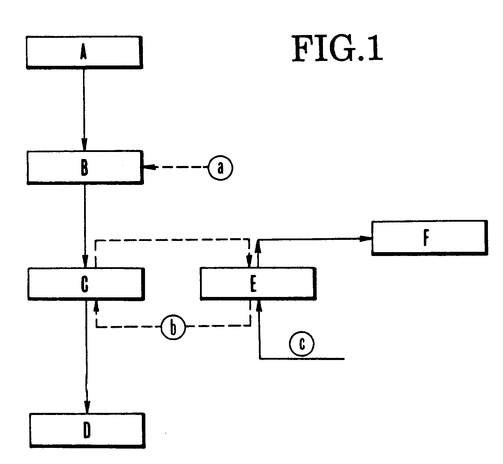

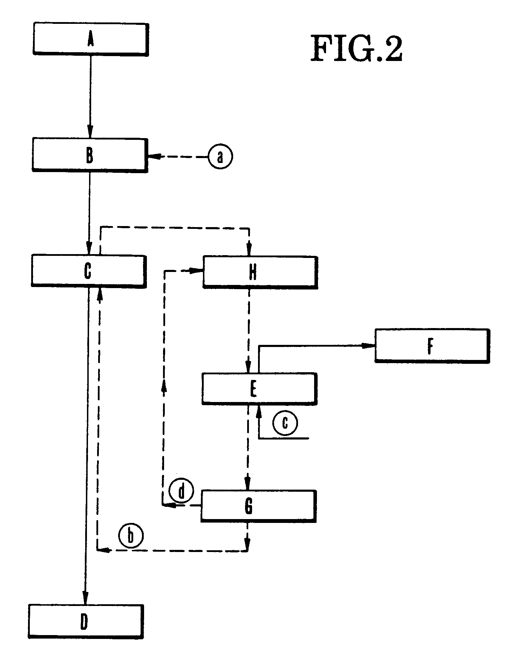

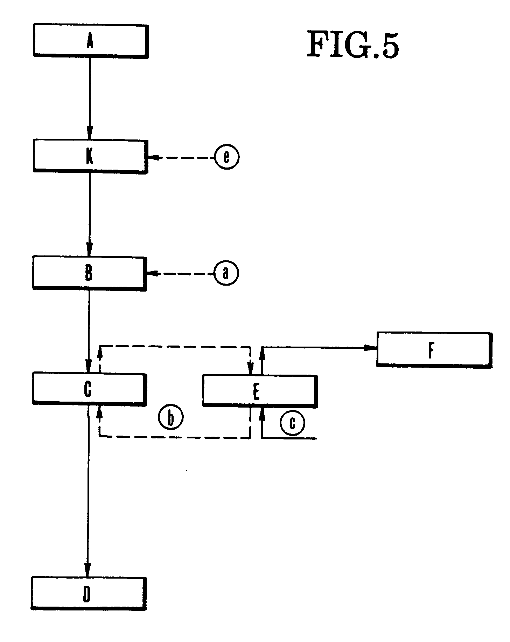

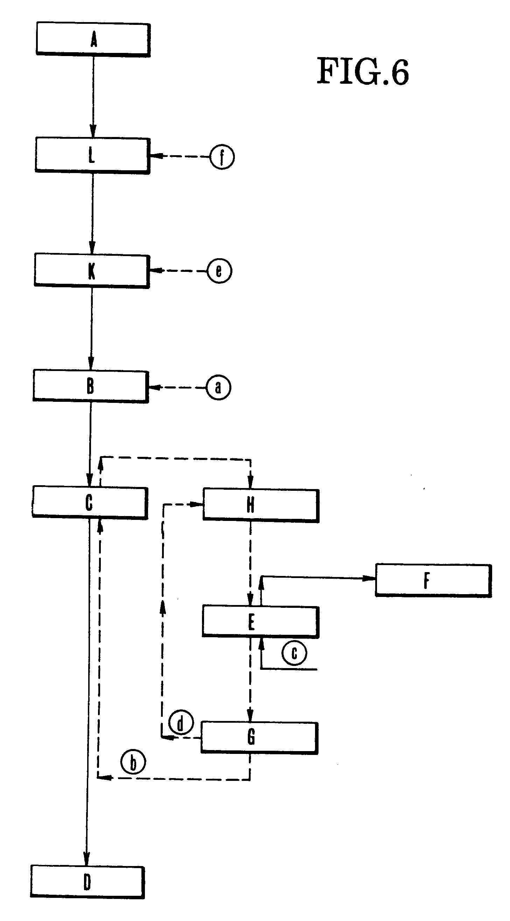

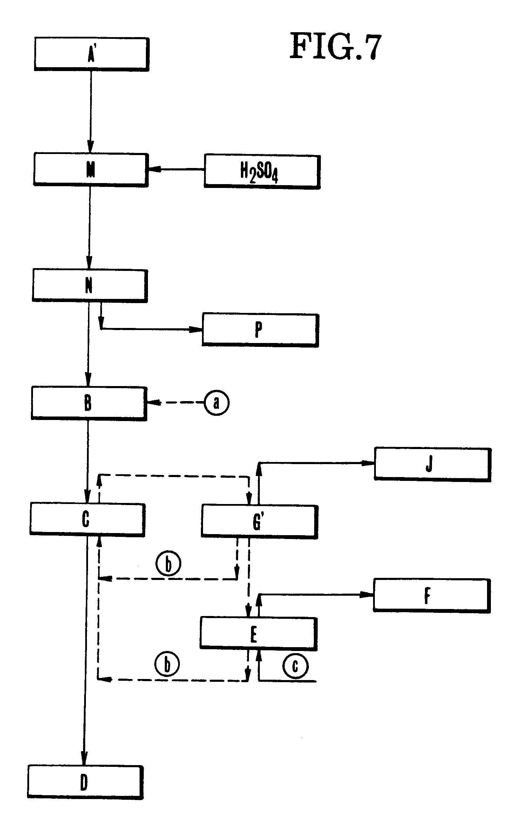

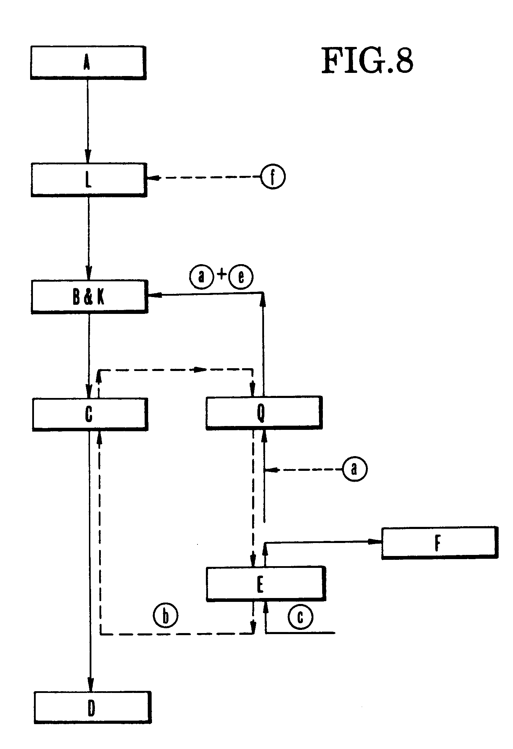

Fig. 1 is a flow sheet showing a basic-type process of the present invention. Figs. 2, 3 and 4 are respectively a flow sheet showing a basic-type process for re-extracting iron chloride from the organic solvent containing iron chloride complex previously extracted thereinto. Fig. 5 is a flow sheet in which the oxidation process of Fe²⁺ ion (K) is inserted in the basic-type process shown in Fig. 1. Fig. 6 is to show a process of controlling Fe ion concentration (L) in the waste sulfuric acid solution, in which the treatments as shown in Figs. 1, 3 and 4 may be applied in the process of extracting iron chloride complex (L) and thereafter. Fig. 7 is a flow sheet in which a process of transforming hydrochloric acid or nitric acid solution into sulfuric acid solution (M) is included. Fig. 8 is a flow sheet similar to Fig. 6, in which however HNO₃ is used as an oxidation agent (e) for oxidizing Fe²⁺ ion after the Fe ion concentration is adjusted in the Fe concentration control process (L).

Preferred embodiments of the present invention will now be described in detail, with reference to the drawings, showing non-limiting examples of the process of the present invention.

The flow sheet in Fig. 1 shows the basic procedure of the present method, in which a sulfuric acid solution containing Fe ions (A) is introduced into a chloridizing process (B), where a compound that comprises Na and Cl, Ca and Cl, K and Cl, Mg and Cl or NH₄ and Cl (a) is added thereto so as to convert Fe ions into chloride, and the resultant solution is introduced into an extraction process (C), where the aqueous phase is brought into contact with at least one oxygen-containing organic solvent and/or alkylamine (b) in order to extract Fe ions from the aqueous phase into the organic phase as chloride complex, leaving a residual aqueous solution (D) in which sulfuric acid is neutralized.

On the other hand, iron chloride complex transferred into the organic phase is brought into contact with water (c) in a re-extracting process (E) for inversely extracting Fe ions and Cl ions in the organic phase back into an aqueous solution (F) and regenerating the oxygen-containing and/or alkylamine-comprising organic solvent (b).

The back-extracted aqueous phase comprises iron chloride solution (F) with no contamination by impurities such as sulfate, so that iron hydroxide can easily be obtained therefrom by double decomposition using cheap Ca(OH)₂, leaving CaCl₂ solution with no formation of precipitates such as gypsum, and iron oxide and metallic iron can easily be obtained therefrom for such uses as electronic material and pigment.

The flow sheet in Fig. 2 is basically same as in Fig. 1, but in order to carry out the extraction of iron in the extraction process (C) more completely, another oxygen-containing organic solvent (d) whose boiling point is lower than that of the former oxygen-containing organic solvent (b) is added in a mixing process (H), and then the resultant organic phase is brought into contact with water in the re-extraction process (E) for inversely extracting Fe ions present together with Cl ions in the organic phase back into the aqueous phase. After inverse extraction, the organic phase is transferred into the next evaporation or distillation process (G) for separating the low boiling point organic solvent (d) added prior to the inverse extraction and regenerating the original organic solvent (b).

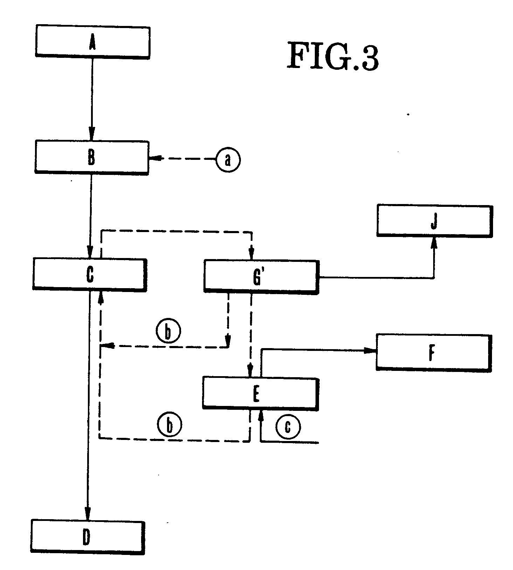

The flow sheet of Fig. 3 is same as that of Figs. 1 and 2 to the extent that sulfuric acid containing Fe is first subjected to neutralization treatment, but the method for re-extracting the oxygen-containing organic solvent (b) containing extracted iron chloride complex differs therefrom. The organic solvent containing iron chloride complex is next introduced into a distillation or evaporation process (G') so as to separate and recover HCl (J) together with physically-contained and extracted water. A part of the organic solvent is also separated therewith. FeCl₃ is concentrated in the organic solvent (b), and the organic solution is contacted with water (c) in a re-extraction process (E) for inversely extracting Fe ions and Cl ions (F) into the aqueous solution. The merit of this procedure is that it improves the effectiveness of the re-extraction due to the separation of HCl together with water prior to the re-extraction for controlling the formation of iron chloride complex.

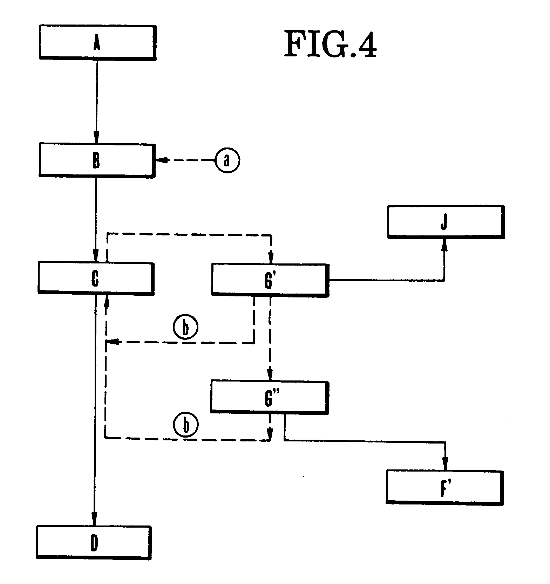

The flow sheet in Fig. 4 is basically the same as the flow sheet in Fig. 3, but the organic solvent containing iron chloride complex, from which HCl and water (J) are removed in a primary distillation or evaporation process (G'), is distilled continuously under reduced pressure or newly distilled or evaporated in a secondary distillation or evaporation process (G") so as to separate and regenerate the organic solvent (b) and to recover anhydrous iron chloride (F') from the residue. Anhydrous iron chloride (F') obtained thereby may be converted into iron oxide or metallic iron by means of known methods. Since the iron chloride is obtained in an anhydrous state, its treatment is easy. Anhydrous iron chloride may also be converted into alkoxide by treatment with alcohol, and may be treated with ammonia gas for production of electronic material.

The flow sheet in Fig. 5 is the same as in Fig. 1 except that, as a countermeasure when iron in the original waste sulfuric acid solution is in the state of Fe²⁺, the oxidation process for iron (K) is added. The process depends either on the addition of an oxidation agent (e) or upon electrochemical oxidation. The treatments thereafter are the same as in Fig. 1.

The flow sheet in Fig. 6 is similar to the flow sheet in Fig. 2, but, as a countermeasure when the content of Fe ion in the waste sulfuric acid solution to be treated is not appropriate (one mol of Fe is necessary for 2 mols of H₂SO₄), the sulfuric acid solution is introduced into an iron concentration adjustment process (L), and an additive (f) - which is a material containing a relatively large amount of iron (such as iron sulfate, an industrial waste containing iron, ilmenite or anatase) when the iron concentration is low, and is waste sulfuric acid or waste hydrochloric acid whose iron content is a small when the iron concentration is relatively high - is added thereto for controlling the ratio of Fe ion and H₂SO₄ appropriately.

In the subsequent oxidation process (K), Fe²⁺ ions in the solution are transformed into Fe³⁺ ions by the addition of an oxidizing agent (e). The treatments thereafter shown in Fig. 6 are same as in Fig. 2, but for the processes of re-extraction and thereafter it is also possible to employ various processes as shown in Fig. 1, 3 and 4.

The flow sheet shown in Fig. 7 relates to a process for the treatment of hydrochloric acid or nitric acid containing iron ions (A') as their main impurity. Sulfuric acid is added to the acid solution (A') in a transformation process (M), and HCl or HNO₃ (P) is separated and recovered due to difference in the vapor pressure in a distillation or evaporating process (N). The resultant sulfuric acid solution containing chiefly iron ions is transferred to a chlorination process (B), where a compound comprising Na, Ca, K, Mg or NH₄ together with Cl (a) is added thereto for converting Fe ions into iron chloride, and the resultant solution is introduced into an extraction process (C). The processes thereafter shown in Fig. 7 are the same as in the case of Fig. 4, but various processes as shown in Figs. 1, 2 and 3 may also be substituted therefor.

Fig. 8 is a flow sheet similar to that shown in Fig. 1, in which however HNO₃ is used as an oxidizing agent (e) for oxidizing Fe²⁺ ions after the Fe ion concentration is controlled in a Fe concentration control process (L). The remaining HNO₃ is extracted simultaneously with iron chloride complex into the organic phase in the extraction process (C). Then, the organic solvent (b) containing iron chloride complex and HNO₃ is introduced into a HNO₃ recovery process (Q), where said organic phase is brought into contact with an aqueous solution containing chloridizing agent (a) (a compound of Na, NH₄ or Mg together with Cl) containing FeCl₃ for transferring only HNO₃ in the organic solution into the aqueous phase, leaving Fe ions and Cl ions in the organic solution (b). Fe ions and Cl ions are then extracted into the aqueous phase in a subsequent re-extraction process (E). HNO₃ transferred into the aqueous phase comprises a solution containing the chloridizing agent (a), and is introduced into an oxidizing and chloridizing process (B or K), the chloridizing agent (a) and the oxidizing agent (e) are repeatedly re-used. As the further processes, the methods shown in Figs. 3, 4 and 7 may be used in combination.

### Examples:

The present invention will now be explained in still more detail with reference to the following examples.

### Example 1:

As a typical waste sulfuric acid solution containing Fe ions, waste sulfuric acid discharged during the production of titanium oxide by a sulfuric acid method was adopted. Its composition is shown in Table 1 below.

**Table 1**

| (g/l) | | | | | | | | |
|---|---|---|---|---|---|---|---|---|
| Total H₂SO₄ | Fe²⁺ | Fe³⁺ | Al | Mn | Ti | V | Cr | Nb |
| 380 | 33.5 | Trace | Trace | 7.8 | 2.8 | 0.1 | 0.1 | 0.01 |

HNO₃ with a concentration of 10% was added to the waste sulfuric acid solution so as to ensure that the concentration of HNO₃ in the solution is 30%, and the resultant solution was heated to 60°C to completely convert all the Fe²⁺ ions present to Fe³⁺ ions. Then, NaCl solution was added in the amount necessary to convert the total H₂SO₄ sufficiently to Na₂SO₄. The composition of the resultant solution is shown in Table 2.

**Table 2**

| (g/l) | | | | | | |
|---|---|---|---|---|---|---|
| Fe³⁺ | Fe²⁺ | Total H₂SO₄ | Total HCl | Total Na | Total HNO₃ | Al, Mn, Ti, V, Cr, Nb |
| 22.1 | <0.1 | 248 | 175 | 115 | 15.1 | Minute Quantities |

The extraction of the solution was carried out by using (a) 50% tributyl phosphate (TBP) + 50% isoparaffin, and (b) 20% trioctyl amine (TOA) + 10% TBP + 70% isoparaffin. The conditions employed in the extraction were as follows: the ratio of organic solvent to sulfuric acid solution (O/A ratio) = 1.2/1, extraction time: 20 minutes, and temperature: room temperature. The analysis of the residual aqueous solution is shown in Table 3.

**Table 3**

| (g/l) | | | | | | | |
|---|---|---|---|---|---|---|---|
| Solvent | Fe³⁺ | Fe²⁺ | Total H₂SO₄ | Total HCl | Total Na | Total HNO₃ | Al, Mn, Ti, V, Cr, Nb |
| (a) | 0.04 | <0.001 | 248 | 120 | 115 | 15.1 | No Change |
| (b) | <0.001 | 0.08 | 246 | 110 | 115 | 15.1 | No Change |

These two solutions were respectively subjected to heating under a reduced pressure (-600 mm Hg) (-0.8 bar) so as to remove HCl and HNO₃, and as a result, it was confirmed that both the amounts of HCl and HNO₃ were reduced to less than 10 g/l, and all the sulfuric acid was neutralized to Na₂SO₄ due to the effect of Na ion added.

### Example 2:

To 1 liter of sulfuric acid solution shown in Table 1, rock salt was added in an amount corresponding to the chemical equivalent of the SO₄ present (430 g). At 70°C, ilmenite with the composition shown in Table 4 and a particle size of less than -100 Tyler standard mesh (-0.147 mm) and 2 mol/l HNO₃ were added alternately thereto, and the addition of HNO₃ was stopped when the concentration of HNO₃ in the solution became about 50%. The addition of ilmenite was continued until the ratio of Fe and sulfuric acid in the solution became 0.95 mol : 2 mol.

**Table 4**

| (wt. %) | | | | | |
|---|---|---|---|---|---|
| Total TiO₂ | FeO | Fe₂O₃ | Al₂O₃ | MnO | Cr₂O₃ |
| 52.18 | 27.86 | 10.18 | 0.33 | 5.96 | 0.015 |

The composition of the solution after the treatment is shown in Table 5.

**Table 5**

| (g/l) | | | | | | | | | | |
|---|---|---|---|---|---|---|---|---|---|---|
| Total H₂SO₄ | Total HCl | Total HNO₃ | Total Na | Fe³⁺ | Al | Mn | Ti⁴⁺ | Cr | V | Nb |
| 260 | 182 | 48.3 | 116 | 70.5 | 0.06 | 7.1 | 4.1 | 0.06 | 0.06 | - |

The thus controlled solution was brought into contact three times with an organic solvent comprising 30% trioctylphosphine oxide (TOPO) + 70% kerosene for extracting Fe ions in the aqueous solution into the organic solvent as iron chloride complex. The extracting conditions in each case was O/A (Org./Aq.) = 5.0/1.0 by volume with the contact time of 5 minutes at 32°C. The composition of the residual aqueous solution is shown in Table 6.

**Table 6**

| (g/l) | | | | | |
|---|---|---|---|---|---|
| Total H₂SO₄ | Total HCl | Total HNO₃ | Total Na | Total Fe | Al, Mn, Ti, Cr, V, Nb |
| 269 | 5.1 | 0.2 | 119 | 0.06 | No Change |

It was proved that the residual solution was completely neutralized, and Na₂SO₄·10H₂O was precipitated on cooling.

### Example 3:

Re-extraction of iron chloride complex extracted in the oxygen-containing organic solvent into the aqueous phase was carried out with the use of water.

At first, the aqueous solution in Table 5 was brought into contact with an organic solvent comprising 35% trioctyl phosphine oxide (TOPO) + 5% 2-ethylhexyl alcohol + 60% n-paraffin countercurrently in 6 stages. The extraction condition was O/A = 2.0/1.0 by volume with a contact time of 5 minutes at 32°C. The residual aqueous solution is shown in Table 7, and the organic solution obtained is shown in Table 8.

**Table 7**

| (g/l) | | | | | |
|---|---|---|---|---|---|
| Total H₂SO₄ | Total HCl | Total HNO₃ | Total Na | Total Fe | Al, Mn, Ti, Cr, V, Nb |
| 261 | 5.2 | 0.1 | 116 | <0.01 | No Change |

**Table 8**

| (g/l) | | | | | |
|---|---|---|---|---|---|
| Total H₂SO₄ | Total HCl | Total HNO₃ | Total Na | Total Fe | Al, Mn, Ti, Cr, V, Nb |
| Trace | 88.3 | 24.1 | Trace | 35.2 | Trace |

The organic solution in Table 8 as it stands (O_{A}) and a sample obtained by adding 0.15 vol.% of 2-ethylhexyl alcohol thereto (O_{B}) were respectively brought into contact with water for the inverse extraction test. The treating condition was O_{A}/A = 1.0/1.4 by volume and O_{B}/A = 1.15/1.4 by volume with the contact time of 5 minutes at 40°C countercurrently in 4 stages. The result is as shown in Table 9.

**Table 9**

| (g/l) | | | |
|---|---|---|---|
| Starting Organic Solution | Solution After Treatment | Fe³⁺ | Cl |
| No 2-ethylhexyl Alcohol | Organic | 10.4 | 26.0 |
| | Aqueous | 17.7 | 44.4 |
| With 2-ethylhexyl Alcohol | Organic | 0.6 | 1.5 |
| | Aqueous | 25.1 | 62.7 |

### Example 4:

### (Extraction)

A sulfuric acid solution containing Fe₂(SO₄)₃ and NaCl with the following composition was prepared artificially:

| | |
|---|---|
| Fe³⁺ | 39.1 g/l |
| Cl | 108.4 g/l |
| SO₄ | 250 g/l |
| Na | 115 g/l |

The extraction of iron chloride complex into organic solvent was done with the use of 50% tributyl phosphate + 50% isoparaffin. The extraction condition was as follows: the ratio of organic solvent to sulfuric acid solution (O/A ratio) = 1.4/1 by volume, extraction time: 20 minutes, and temperature: room temperature. The analysis of the residual aqueous solution was as below:

| | |
|---|---|
| Fe³⁺ | 2.1 g/l |
| Total SO₄ | 250 g/l |
| Total Cl | 14.8 g/l |
| Na | 115 g/l |

### (Distillation of organic solvent)

The contents of Fe, Cl and H₂O in the organic phase in the above extraction experiment was as below:

| | |
|---|---|
| Fe | 28.1 g/l |
| Cl | 70.5 g/l |
| H₂O | 36.3 g/l |

200 ml of said organic phase was distilled at 28 - 35°C under a reduced pressure of 3 torrs (400 Pa) until the volume of the bottom solution reaches 48 ml. The analysis of the result was as follows:

| Bottom solution | |
|---|---|
| Volume | 48 ml |
| Fe | 117.1 g/l |
| Cl | 220.3 g/l |

| Distillate (-80°C) | |
|---|---|
| Total volume | 152 ml |
| Volume of organic solvent | 116 ml |
| Volume of HCl solution | 36 ml |
| Concentration of HCl | 101 g/l |

### (Back extraction)

Back extraction was done by bringing water into contact with the organic phase remaining at the bottom part in the above distillation experiment under agitation. The extraction condition was as follows: O/A = 1/3 by volume, time of agitation: 10 minutes and temperature: room temperature.

| | Organic phase | Aqueous phase |
|---|---|---|
| Fe | 1.4 g/l | 151.1 g/l |
| HCl | 2.7 g/l | 292.5 g/l |

Very excellent results could be obtained as compared with the case where no distillation of the organic phase was performed.

### (FeCl₃ manufacture)

Instead of subjecting the bottom solution of the organic phase in the above mentioned distillation experiment to back extraction, it is in this case subjected to further distillation up to a temperature in the range from 85 to 90°C under a reduced pressure of 3 torrs (400 Pa), and in this way anhydrous FeCl₃ was obtained, with the analytical value as shown below.

| | |
|---|---|
| Weight | 16.3 g |
| Fe | 34.3 % |
| Cl | 65.0 % |
| Organic solvent | 0.6 % |
| Water | 0.0 % |

## Claims

1. A method for neutralization of sulfuric acid containing Fe ions, comprising adding ions selected from the group consisting of Ha ions, K ions, Mg ions, Ca ions and NH₄ ions in the form of a compound containing chlorine to a sulfuric acid solution containing impurities comprising chiefly iron ions in an amount corresponding at least to the chemical equivalent to SO₄²⁻, and bringing the resultant solution into contact with an organic solvent (b) containing oxygen and/or comprising alkylamine to extract Fe ions from said aqueous solution into the organic solvent as chloride complex.

2. A method according to claim 1, in which the sulfuric acid to be treated is one obtained by adding sulfuric acid to a hydrochloric acid or nitric acid solution containing impurities chiefly comprising Fe ions and distilling or evaporating the resultant solution under reduced or ordinary atmospheric pressure to remove HCl or NHO₃.

3. A method according to claim 1 or 2, in which the compound containing chlorine to be added to the sulfuric acid solution comprises rock salt.

4. A method according to claim 1, 2 or 3, in which an oxidizing agent is added to the sulfuric acid solution to be treated prior to the extraction of iron ions therefrom into the organic solvent when the iron ions contained are in the state of Fe²⁺ to oxidize said Fe²⁺ ions to Fe³⁺ ions electrochemically.

5. A method according to any one of claims 1 to 4, in which another oxygen-containing organic solvent (d) is added newly to the organic solvent (b) containing iron chloride complex, the resultant organic solution is brought into contact with water to inversely extract Fe ions and Cl ions into the water, and then the remaining organic solution is distilled or evaporated under reduced or ordinary atmospheric pressure to separate the oxygen-containing organic solvent (d) added prior to the inverse extraction and regenerate the organic solvent (b).

6. A method according to any one of claims 1 to 4, in which, after distilling or evaporating the organic solvent containing iron chloride complex under reduced or ordinary pressure for separating and recovering hydrochloric acid and water, the remaining organic solution is brought into contact with water to inversely recover iron chloride and regenerate the organic solvent.

7. A method according to any one of the preceding claims, in which when the molar ratio of Fe ions contained in the sulfuric acid solution relative to the sum of SO₄ ions combined with Fe ions and free SO₄ ions is less than 0.66:1, a solution or solid containing iron is added to the sulfuric acid solution.

8. A method according to claim 4, in which the oxidizing agent to be added to the sulfuric acid solution is HNO₃.

9. A method according to any one of the preceding claims, in which the solution remaining after extracting the Fe ions from the aqueous solution into the organic solvent is distilled or evaporated under reduced pressure to recover HCl or HNO₃.

10. A process according to claim 8, in which the organic solvent into which the iron chloride complex and HNO₃ have been extracted is brought into contact with an aqueous solution containing at least one chlorine-containing compound which also contains Na, Mg and/or NH₄ ions(s) serving as chloridizing agent together with ferric chloride so as thereby selectively to transfer HNO₃ into the aqueous solution.

## Patentansprüche

1. Verfahren zur Neutralisation von Fe-Ionen enthaltender Schwefelsäure, umfassend die Zugabe von Ionen, ausgewählt aus der Gruppe der Na-, K-, Mg-, Ca- und NH₄-Ionen in Form einer chloridhaltigen Verbindung zu einer Schwefelsäurelösung, die Verunreinigungen enthält, umfassend hauptsächlich Eisenionen in einer Menge, die mindestens dem chemischen Äquivalent der SO₄²⁻-Ionen entspricht und das Inberührungbringen der entstehenden Lösung mit einem organischen Lösungsmittel (b), das Sauerstoff enthält und/oder ein Alkylamin umfaßt, um die Eisenionen von der wäßrigen Lösung in das organische Lösungsmittel als Chloridkomplex zu extrahieren.

2. Verfahren nach Anspruch 1, wobei die zu behandelnde Schwefelsäure durch Zugabe von Schwefelsäure zu einer Salzsäure- oder Salpetersäurelösung, die Verunreinigungen, im wesentlichen Eisenionen, enthalten und durch Abdestillieren oder Verdampfen der entstehenden Lösung unter vermindertem oder normalem Atmosphärendruck zur Entfernung von HCl oder HNO₃, erhalten wird.

3. Verfahren nach Anspruch 1 oder 2, wobei die zu der Schwefelsäure zuzufügende chloridhaltige Verbindung Steinsalz umfaßt.

4. Verfahren nach Anspruch 1, 2 oder 3, wobei, wenn die enthaltenen Eisenionen als Fe²⁺ Vorliegen, vor der Extraktion der Eisenionen in das organische Lösungsmittel ein Oxidationsmittel zu der zu behandelnden Schwefelsäurelösung zugefügt wird, damit diese Fe²⁺-Ionen elektrochemisch zu Fe³⁺-Ionen oxidiert werden.

5. Verfahren nach einem der Ansprüche 1 bis 4, wobei ein weiteres sauerstoffhaltiges organisches Lösungsmittel (d) erneut dem organischen Lösungsmittel (b), das den Eisenchloridkomplex enthält, zugefügt wird, die erhaltene organische Lösung zur inversen Extraktion von Eisenionen und Chlorionen in Wasser mit Wasser in Berührung gebracht wird, und dann die übrige organische Lösung unter vermindertem oder normalem Atmosphärendruck abdestilliert oder verdampft wird, damit das sauerstoffhaltige organische Lösungsmittel (d), das vor der inversen Extraktion zugefügt wurde, abgetrennt und das organische Lösungsmittel (b) erneuert wird.

6. Verfahren nach einem der Ansprüche 1 bis 4, wobei, nachdem das organische Lösungsmittel, das den Eisenchloridkomplex enthält, zur Abtrennung und Rückgewinnung von Salzsäure und Wasser unter vermindertem oder normalem Druck abdestilliert oder verdampft wurde, die verbleibende organische Lösung zur inversen Zurückgewinnung von Eisenchlorid und zur Erneuerung des organischen Lösungsmittels mit Wasser in Berührung gebracht wird.

7. Verfahren nach einem der vorstehenden Ansprüche, wobei eine eisenhaltige Lösung oder ein eisenhaltiger Feststoff der Schwefelsäure zugefügt wird, wenn das molare Verhältnis der in der Schwefelsäurelösung vorhandenen Fe-Ionen zu der Summe der SO₄-Ionen kombiniert mit Fe-Ionen und freien SO₄onen weniger als 0,66:1 ist.

8. Verfahren nach Anspruch 4, wobei das der Schwefelsäurelösung zuzufügende Oxidationsmittel HNO₃ ist.

9. Verfahren nach einem der vorstehenden Ansprüche, wobei die Lösung, die nach der Extraktion der Fe-Ionen von der wäßrigen Lösung in das organische Lösungsmittel verbleibt, zur Rückgewinnung von HCl oder HNO₃ unter vermindertem Druck abdestilliert oder verdampft wird.

10. Verfahren nach Anspruch 8, wobei das organische Lösungsmittel, in welches der Eisenchloridkomplex und HNO₃ extrahiert wurden, mit einer wäßrigen Lösung in Berührung gebracht wird, die mindestens eine chloridhaltige Verbindung, die ebenfalls Na, Mg und/oder NH₄-Ionen, welche als Chlorierungsmittel zusammen mit dem Eisen(III)-chlorid dient, enthält, so daß hierdurch selektiv HNO₃ in die wäßrige Lösung überführt wird.

## Revendications

1. Procédé pour la neutralisation d'acide sulfurique contenant des ions Fe, comprenant l'addition d'ions choisis dans le groupe constitué d'ions Na, d'ions K, d'ions Mg, d'ions Ca et d'ions NH₄ sous la forme d'un composé contenant du chlore à une solution d'acide sulfurique comportant des impuretés comprenant principalement des ions fer dans une quantité correspondant au moins à l'équivalent chimique de SO₄²⁻, et la mise de la solution obtenue en contact avec un solvant organique (b) contenant de l'oxygène et/ou comprenant une alkylamine pour extraire les ions Fe de ladite solution aqueuse et les transférer au solvant organique sous forme d'un complexe de chlorure.

2. Procédé selon la revendication 1, dans lequel l'acide sulfurique à traiter est un acide obtenu par addition d'acide sulfurique à une solution d'acide chlorhydrique ou d'acide nitrique contenant des impuretés constituées principalement d'ions Fe et distillation ou évaporation de la solution obtenue sous pression réduite ou pression atmosphérique ordinaire pour éliminer HCl ou NHO₃.

3. Procédé selon la revendication 1 ou 2, dans lequel le composé contenant du chlore devant être ajouté à la solution d'acide sulfurique comprend du sel gemme.

4. Procédé selon la revendication 1, 2 ou 3, dans lequel on ajoute un agent oxydant à la solution d'acide sulfurique devant être traitée avant l'extraction des ions fer de cette solution pour les transférer au solvant organique lorsque les ions fer contenus sont dans l'état Fe²⁺ afin d'oxyder électrochimiquement lesdits ions Fe²⁺ en ions Fe³⁺.

5. Procédé selon l'une quelconque des revendications 1 à 4, dans lequel un autre solvant organique contenant de l'oxygène (d) est ajouté fraîchement au solvant organique (b) contenant un complexe de chlorure de fer, la solution organique obtenue est mise en contact avec de l'eau pour extraire de manière inverse les ions Fe et les ions Cl et les transférer dans l'eau, et alors la solution organique restante est distillée ou évaporée sous pression réduite ou sous la pression atmosphérique ordinaire afin de séparer le solvant organique contenant de l'oxygène (d) ajouté avant l'extraction de manière inverse et régénérer le solvant organique (b).

6. Procédé selon l'une quelconque des revendications 1 à 4, dans lequel, après distillation ou évaporation du solvant organique contenant le complexe de chlorure de fer sous pression réduite ou sous la pression ordinaire pour séparer et récupérer l'acide chlorhydrique et l'eau, la solution organique restante est mise en contact avec de l'eau pour récupérer de manière inverse le chlorure de fer et régénérer le solvant organique.

7. Procédé selon l'une quelconque des revendications précédentes, dans lequel, lorsque le rapport molaire des ions Fe contenus dans la solution d'acide sulfurique par rapport à la somme des ions SO₄ combinés avec les ions Fe et les ions SO₄ libres est inférieur à 0,66 : 1, une solution ou un solide contenant du fer est ajouté à la solution d'acide sulfurique.

8. Procédé selon la revendication 4, dans lequel l'agent oxydant à ajouter à la solution d'acide sulfurique est HNO₃.

9. Procédé selon l'une quelconque des revendications précédentes, dans lequel la solution restant après l'extraction des ions Fe de la solution aqueuse pour les transférer au solvant organique est distillée ou évaporée sous pression réduite pour récupérer HCl ou HNO₃.

10. Procédé selon la revendication 8, dans lequel le solvant organique dans lequel le complexe de chlorure de fer et HNO₃ ont été extraits est mis en contact avec une solution aqueuse contenant au moins un composé comprenant du chlore qui contient aussi des ions Na, Mg et/ou NH₄ servant d'agent de chloruration en même temps que du chlorure ferrique de manière à transférer ainsi sélectivement HNO₃ à la solution aqueuse.
